# EUROPEAN PATENT SPECIFICATION

(11) **EP 1 425 603 B1**
(45) Date of publication and mention of the grant of the patent: **21.06.2006**
(21) Application number: 02722451.8
(22) Date of filing: 24.04.2002
(51) Int. Cl.: G01S 5/14, G01S 1/02

(54) **MOBILE COMMUNICATION APPARATUS**
MOBILFUNKGERÄT
SYSTEME DE COMMUNICATION MOBILE

(30) Priority: 25.04.2001 GB 0110156
(43) Date of publication of application: 09.06.2004
(73) Proprietor: Ceva Ireland Limited, Dublin 2 (IE)
(72) Inventor: PRATT, Anthony, Richard, Northamptonshire NN6 9DE (GB)
(74) Representative: Blatchford, William Michael
(86) International application number: PCT/GB2002/001898
(87) International publication number: WO 2002/088767

(56) References cited:
- GB-A- 2 307 812
- US-A- 5 440 491
- US-A- 5 841 396
- US-A- 6 041 222
- US-A- 6 133 874
- US-B1- 6 178 195

## Description

This invention relates to mobile apparatus for receiving satellite positioning signals, to methods of estimating a tuning error of a positioning receiver, and to a communications system.

Many mobile communication devices require the capability to determine their location. Some of these devices have this capability for the purpose of locating the originator of emergency-related telephone calls. Increasingly, these devices are associated with mobile commerce and information services. Location knowledge can be an important element in the data transaction between a customer and a supplier in that it allows location dependent access to local suppliers, minimising time and/or cost to provide a required service or goods. An essential element in the provision of such emergency and commercial services is the provision of a two-way communication link. This may take one of several forms, such as a packet radio system or a cell-based wireless telephone communication system.

Location fixes can be provided using a Satellite Positioning System (SPS) in which signals are received from orbiting satellites or from equivalent ground-based transmitters (known as pseudolites) which emit positioning signals. The requirements of SPS receivers often include the capability to operate in an intermittent mode (to minimise power consumption) and the capability to operate a security policy, allowing access to location information only by authorised users. In the intermittent mode of operation, a key feature in the start-up sequence is the search for signals from satellites of the SPS satellite constellation. Most SPS satellites provide identification signals based on the principles of code-division multiple access. GPS satellites typify this approach, and it is expected that the Galileo system will also adopt this technique. Glonass instead uses a frequency division multiple access technique, which provides similar results using an alternative, but otherwise equivalent, mechanism.

There are a number of key parameters the knowledge of which is required by an SPS receiver for satellite signal reception. These parameters are: the identity of the satellites above the user's horizon, codes used by those satellites, the pseudo-range offsets required to tune the SPS receiver to the satellites' codes, and the frequency offsets required to tune the SPS receiver to the satellites' signals. The frequency offsets are a combination of several effects, namely: Doppler frequency offsets caused by user motion, receiver reference oscillator frequency errors, and satellite Doppler frequency offsets.

Estimates of satellite Doppler frequency are position dependent and therefore have additional errors if the location at which estimates are computed is different from the location of the mobile user of this information. This effect would be observable, for example, if a satellite Doppler estimate were computed at the base station of a cell-based wireless communication system and broadcast to all nearby mobile users. Doppler frequency offsets caused by satellite and user motion are resolved along the user to satellite line of sight (LOS) vector, and are individual to each satellite-user combination. However, errors in the SPS receiver's reference frequency are common to all received signals from every satellite transmitter.

Communication systems typically are subject to strict requirements concerning the frequency of the transmitted signals at each end of the communications link (if two-way) or at the transmitter (if one-way), to minimise the effects of interference between adjacent frequency bands or channels. Typically, at least one end of a two-way communications link includes a temperature controlled or temperature compensated quartz oscillator, which provides a stable precision frequency reference signal. Such a precision frequency reference source is used at each base station of a cell-based telephone system, and is often used by a mobile telephone to stabilise its internal reference oscillator. This may involve calibration or tracking loop techniques such as phase lock loop or frequency lock loop. These techniques may involve determining the data sent to frequency synthesisers, the data being dependent on the measurement of the frequency error of the reference oscillator of the mobile telephone.

The effect of such control systems in the mobile communications device is to transfer to a large extent the accuracy of the base station precision frequency reference to the mobile device. This effect is used in the receivers described in US 5,841,396; US 6,133,874 and US 6,041,222.

According to a first aspect of the invention, there is provided mobile communication apparatus having a position-fixing capability, wherein the apparatus comprises: a two-way communications subsystem having a first signal source for producing, in response to a stabilising signal received from a remote station, a signal having a precision reference frequency; a training signal generator for generating a pilot signal at an output thereof, the training signal generator having an input coupled to an output of the first signal source so that the pilot signal is linked to the reference frequency; and a satellite positioning system (SPS) receiver subsystem comprising: at least one signal path; a coupling between the signal path and the training signal generator output; an antenna for applying to the signal path positioning signals received from SPS transmitters; a carrier signal replica generator for generating a replica signal being a replica of a positioning signal received from an SPS transmitter; and a control system operable to cause the carrier signal replica generator to bring the replica signal into alignment with the pilot signal when the pilot signal is received by the SPS receiver subsystem and to store information representative of a setting of the replica generator occurring at the time of the alignment; the control system being further operable to cause the SPS receiver subsystem to search for positioning signals transmitted by an SPS transmitter according to the setting information.

The pilot signal is preferably modulated with a signal of a type modulated onto the positioning signals to be received by the SPS receiver subsystem so that the pilot signal mimics an SPS positioning signal and is processed in the SPS receiver subsystem signal path. The pilot signal may have a carrier signal which is a radio frequency signal at a frequency at least approximately equal to the frequency or frequencies of the SPS positioning signals. Alternatively, the pilot signal may have a carrier frequency at least approximately equal to an intermediate frequency of the SPS receiver subsystem so that it can be picked up in the intermediate frequency stages of the SPS receiver subsystem and then processed as if it was an SPS positioning signal.

Whether the pilot signal is transmitted at a frequency in the region of the; transmission frequency of the SPS positioning signals or in the region of the receiver subsystem intermediate frequency, it may include a predetermined frequency offset from the transmission frequency or an intermediate frequency respectively. This offset may be "designed in" for reasons of system convenience e.g. insofar as the precision reference frequency of the communications subsystem may not permit a whole-number multiple to be obtained which matches the respective frequency of signals in the. SPS receiver subsystem. Alternatively, an offset may be introduced to reduce the possibility of interference between the pilot signal and wanted SPS positioning signals. The amount of the frequency offset may be signalled to the SPS receiver subsystem in data modulated onto the pilot signal in the training signal generator.

The control system of the SPS receiver subsystem may include means for requesting the training signal generator to generate the pilot signal, i.e. to turn it on or off, to increase or reduce its level, or to shift its frequency when not required. In particular, the control system preferably causes the receiver subsystem to operate alternately in a training mode and a searching mode, so that a carrier signal replica generator setting can be established in the training mode, information relating to it can be stored by the control system and then used to generate new settings for use in the search mode for rapid acquisition of SPS positioning signals.

The SPS receiver control system typically includes a processor with program means for performing the training mode and the search mode. The carrier signal replica generator settings used in the search mode typically incorporate offsets to take account not only of any offset introduced by the training signal generator, but also individual frequency offsets in the SPS positioning signals received from different SPS transmitters. Such offsets occur, for instance, as Doppler frequency shifts which may be computed in the control system processor using approximate positioning information already obtained, or using data transmitted from a remote station.

According to a second aspect of the invention, there is provided a method of searching for positioning signals transmitted by a satellite positioning system (SPS) transmitter, the method comprising: using a signal source forming part of a two-way communications subsystem and having a precision reference frequency stabilised in response to a stabilising signal received from a remote station as a reference to generate a pilot signal; generating a carrier replica signal in a carrier signal replica generator; controlling the carrier signal replica generator to cause the replica signal to become aligned with the training signal; using a setting of the carrier signal replica generator at a time when the replica signal was aligned with the training signal to search for positioning signals transmitted by an SPS transmitter, and, subsequently, controlling the carrier signal replica generator to cause the replica signal to become aligned with the positioning signals.

According to a further aspect of the invention, there is provided a communications system including mobile communication apparatus as described above and a remote station in wireless communication with the mobile apparatus, the remote station including a temperature controlled or temperature compensated precision reference frequency source.

The invention also includes a communications and position-fixing system comprising a communications base station and a mobile station, each said station having a respective receiver and transmitter to provide a two-way radio communication link between the stations, wherein the base station has a precision frequency reference; and the mobile station comprises a reference signal source, means for adjusting the reference signal source to cause it to produce a frequency reference signal calibrated by the precision frequency reference over the said link, a training signal generator arranged to generate an SPS training signal using the calibrated frequency reference signal as a frequency reference, and an SPS receiver arranged to receive SPS positioning signals and having a carrier signal replica generator for generating a replica signal which is a replica of a positioning signal which the SPS receiver is arranged to receive, the SPS receiver further having control circuitry arranged to set the carrier signal replica generator thereby to align the replica signal with the training signal, the SPS receiver being arranged to perform a search for satellite positioning signals using that setting of the replica generator. As outlined above, the training signal may be injected into a front end circuit of the SPS receiver or into an intermediate frequency stage.

According to yet a further aspect of the invention, there is provided a computer program storage medium for configuring a mobile communication apparatus according to the first aspect, the storage medium storing program means which operate to feed the pilot signal to an SPS signal path in the receiver subsystem, to operate the receiver subsystem to pick up the pilot signal and to align a carrier replica signal generated in the receiver subsystem with the training signal, to store an associated setting of a carrier replica generator generating the replica signal, and to initiate a search by the receiver subsystem for satellite positioning signals using the said setting of the carrier replica generator.

Embodiments of the invention will now be described, by way of example, with reference to the accompanying drawings, in which:
Figure 1 is a schematic diagram of a system embodying the invention;
Figure 2 is a more detailed schematic diagram of part of the system of Figure 1, including a training signal generator;
Figure 3 is a schematic diagram of a system including an alternative training signal generator; and
Figure 4 is a flow diagram illustrating operation of part of the system of Figure 1.

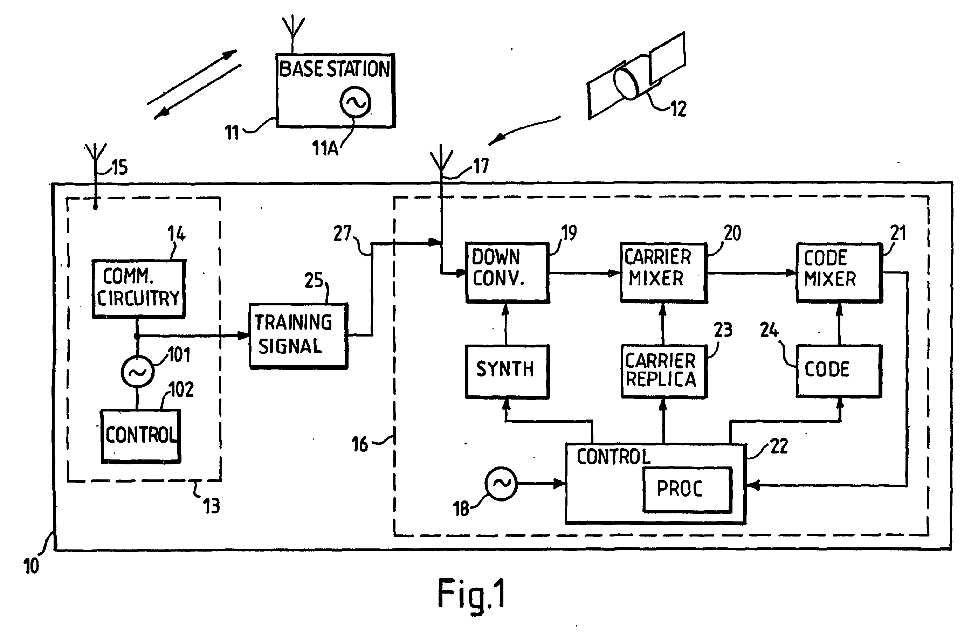

Referring to Figure 1. a mobile communication and positioning device 10 is in communication with a base station (BS) 11, forming part of a cellular radio system, and is able to receive signals from a satellite, such as a GPS satellite 12. The BS 11 includes a fixed reference oscillator 11A. The fixed reference oscillator 11 A may be one whose frequency-determining element is an atomic standard, such as a caesium beam, rubidium gas or hydrogen gas element, or a quartz-controlled oscillator. If the frequency controlling element is quartz, the vibrating element and its maintaining amplifier may be mounted in a temperature controlled enviromnent

The mobile device 10 includes a two-way communications subsystem 13, which includes a mobile reference frequency oscillator 101, an oscillator control device 102, communication circuitry 14 and an antenna 15.

The mobile device 10 also includes an SPS receiver subsystem 16 for position-fixing, which subsystem includes an SPS antenna 17, an SPS receiver reference oscillator 18 and a signal path including a down-converter 19, a carrier mixer 20 and a code mixer 21. Components in the signal path receive and process SPS signals received via the SPS antenna 17. The SPS receiver subsystem 16 also includes a control device 22, a carrier signal replica generator 23 and a code generator 24.

The oscillator control device 102 in the communications subsystem 13 may include a phase lock loop, a frequency lock loop or a simple calibration system. Such an arrangement may be analogue or digital, and may result in a small, known frequency offset. The reference frequency oscillator 101 is controlled by the control device 102 such that it oscillates at a frequency stabilised with respect to the fixed reference oscillator 11A in the BS 11 so that it becomes a stable, precision reference oscillator.

The SPS receiver subsystem 16 thusfar described is conventional.

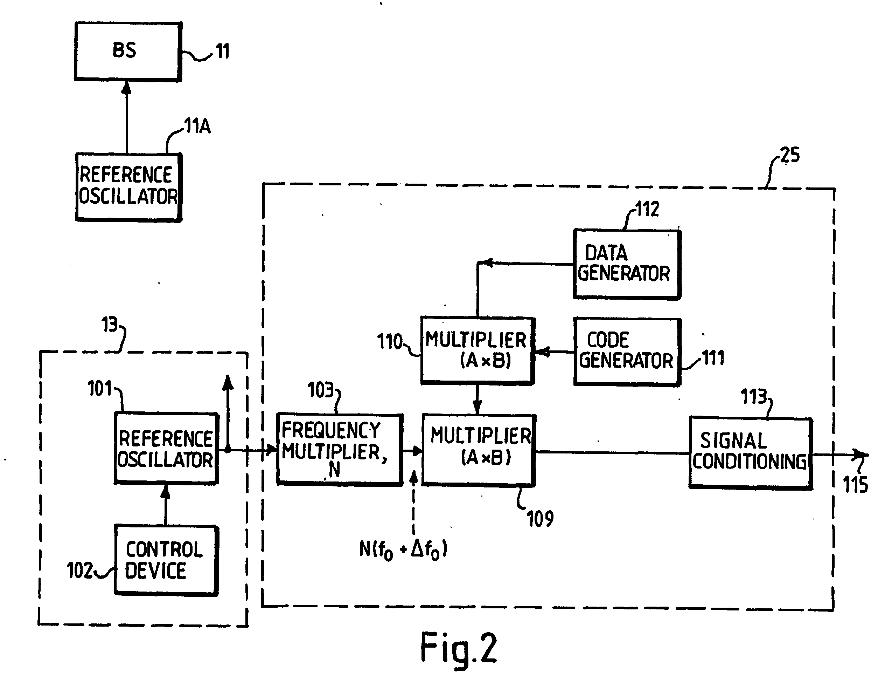

The mobile device 10 also includes a training signal generator 25 for training the SPS receiver subsystem 16 to acquire SPS signals efficiently. The training signal generator is described below with reference to Figure 2. A coupling 27 links an output of the training signal generator 25 to the above-mentioned signal path of the SPS receiver subsystem. Here, the coupling is a conducting link, but coupling between the pilot signal generator 25 and the SPS receiver subsystem signal path may be simply capacitive or inductive in the sense that the proximity and layouts of the pilot signal generator output and the SPS receiver subsystem signal path, and the magnitude of the pilot signal, are such that the pilot signal is picked up by components of the signal path.

Referring to Figure 2, an output of the mobile reference frequency oscillator 101 provides a signal having a frequency (fₒ + Δfₒ), where Δfₒ is the optional frequency offset. This signal is used by hardware components of the communications subsystem 13, and is also provided to the training signal generator 25 which provides a pilot signal.

In the training signal generator 25, a frequency multiplier 103 receives the output of the mobile reference frequency oscillator 101 and provides a signal having a frequency N(fₒ + Δfₒ) to a multiplier 109. A second input of the multiplier 109 receives a signal formed by multiplying the output of a data generator device 112 with the output of a code generator device 111 in a second multiplier 110. The multipliers 109, 110 may be binary phase modulators. The pilot signal is produced to be at a level comparable to or, preferably, higher than the levels normally associated with positioning signals in order that the pilot signal may be easily acquired by the SPS receiver circuitry via the coupling 27 (Figure 1) with a good signal-to-noise ratio.

The amount of the frequency offset may be known at the time of design or test of the SPS receiver 16, and stored in a memory of the receiver. Alternatively, the frequency offset could be transmitted in data from the data generator 112, which data is used to modulate the training signal carrier. In GPS, the data is modulated using BPSK at 50bps.

The form of the data generator device 112 and the code generator device 111 depends on the modulation characteristics of the positioning system being used. For the case of GPS, the code generator device 111 preferably generates one of the codes the use of which has been specified in ICD-GPS-200, although this is not essential. The code is preferably a 1023-bit long code. Filtering and amplification of the signal provided by the multiplier 109 is performed by a signal conditioning device 113, connected between the multiplier and an output 115. The result is a pilot signal having a frequency equal to the frequency of the GPS L1 carrier signals, BPSK modulated with a GPS code and GPS-type data. Alternatively, the frequency of the pilot signal is offset from the L1 carrier signal frequency by NΔfₒ.

The training signal generator 25 may require modification for use with a positioning subsystem designed to receive signals from satellites other than those of the GPS constellation. For example, the multipliers 109, 110 may need to be replaced by suitable devices where modulation other than binary phase shift keying (BPSK) is used.

In one embodiment, the pilot signal is not modulated, but is simply a square wave or sine wave signal.

In an alternative embodiment, the frequency multiplier 103 generates a digital signal at a sub-harmonic of the frequency of the SPS positioning signals or of a frequency near to the frequency of the SPS positioning signals. This sub-harmonic may be a precise or approximate odd sub-multiple of the frequency of the SPS positioning signals. The multiplier 109 may then take a simple form, depending on the modulation system used by the SPS satellites 12. BPSK modulation at an odd sub-multiple results in BPSK modulation at the SPS signal frequency.

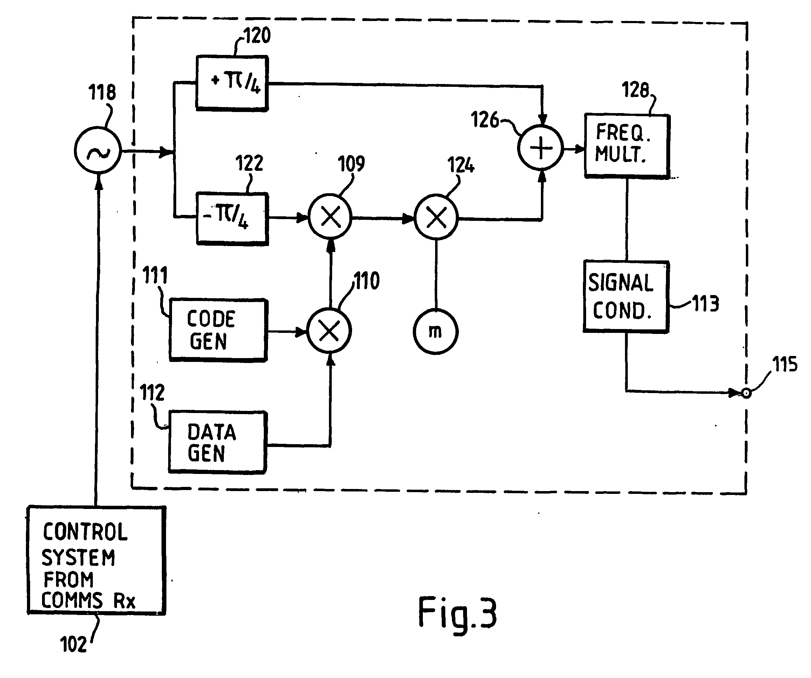

Referring to Figure 3, in another alternative embodiment, a frequency source 118 (which may be a reference oscillator controlled by the control system of the communications receiver subsystem, as shown) provides two outputs in phase quadrature at a submultiple of the frequency of the SPS positioning signals. In the illustrated example, such outputs are generated by using positive and negative π/4 phase shifters 120, 122.

One of the two quadrature outputs is multiplied in multiplier 109 with the multiplied outputs of the code generator 111 and the data generator 112 to produce, in this example, a BPSK signal which is then fed to a further multiplier 124 which sets the amplitude of the modulation components according to a parameter *m*. The resulting signal is fed to one input of an adder 126, the other input of which receives, in effect, a carrier signal from the phase shifter 120 so as to produce at the output of adder 126 a phase-modulated signal having a modulation angle which is determined by the relative amplitudes of the two components. The parameter *m* is adjusted to set the amplitude of the phase modulation so that when the signal produced by the adder 126 is multiplied in frequency by frequency multiplier 128, the correspondingly multiplied modulation phase angle components have a predetermined phase angle amplitude as required for the pilot signal. The pilot signal appears at the pilot signal generator output 115 after signal conditioning in signal conditioner 113.

In order to acquire the pilot signal, the SPS receiver 16 first selects the modulation code in use by the training signal generator 25, and selects a suitable tuning frequency range.

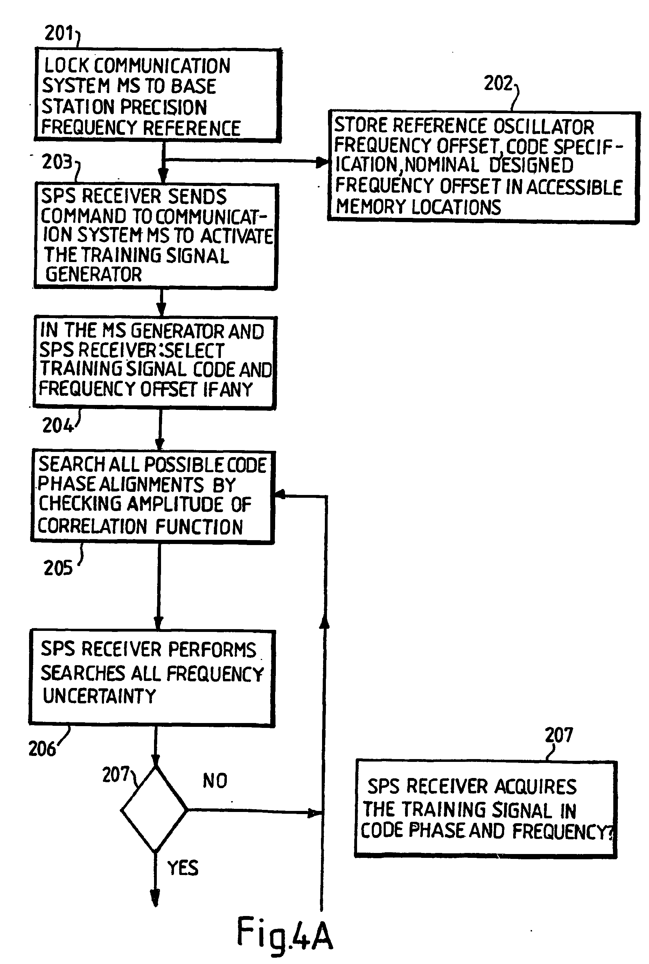

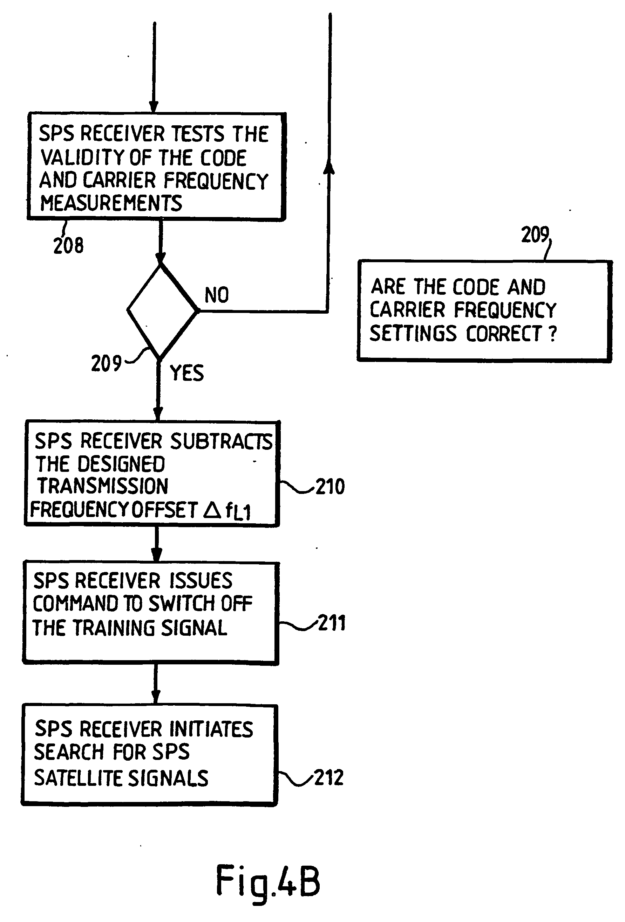

Figure 4 is a flow diagram setting out the sequence of steps that the mobile apparatus 10 takes in searching for and tracking the signal from the training signal generator 25. These steps may be embodied in a computer program which is run in a processor forming part of the mobile apparatus or, specifically, to the SPS receiver subsystem 16. The program itself may be initially introduced from a compact disk (CD ROM) or another physical storage media, or downloaded over a communication link, e.g. from the Internet.

In step 201, the two-way communication subsystem 13 arranges for the precision reference oscillator 101 to be locked to the reference oscillator 25 in the BS 11. At step 202, any frequency offset is stored in a memory location accessible also to the SPS receiver subsystem 16. Additional information which may also be stored in the accessible memory locations is the definition of the code sequence and the formats of any data messages modulated onto the training signals. When the SPS receiver subsystem 16 initiates a search for SPS positioning signals, it first sends a command at step 203 to the training signal generator 25, in order to prompt it to generate a pilot signal. In step 204, the SPS receiver 16 obtains from the memory locations mentioned above any information about the code modulated onto the pilot signal, and any designed frequency offset. These characteristics are set in the replica code and carrier generators 23, 24 of the SPS receiver 16. In step 205, the SPS receiver searches for code phase alignment between the replica code generator 24 and that of the pilot signal. In step 206, the receiver searches for carrier frequency alignment. The searches of steps 205 and 206 may be carried out serially or simultaneously, or a combination thereof, depending upon the hardware and software resources made available to the signal search process. The processes involved in steps 205 and 206 are iterative and continue until step 207 determines that the carrier replica generator 23 is aligned with the pilot signal. In step 208, quality tests are performed to check that the correct code phase and carrier frequency have been chosen. The tests on code phase usually involve checking that the amplitude of the correlation peak (between a replica code signal and the pilot signal) is nearly correct. The tests on the carrier frequency may embrace tests at nearby aliased frequencies to confirm that the correlation peak is maximised at the chosen carrier frequency. Usually, such further checking involves considering the code phase and carrier phase elements of the pilot signal and testing for compatibility between the frequencies of these parameters. Possible nearby aliased carrier frequencies are also checked to measure the signal strength. If the correct replica signal has been generated, all other checks will give lower signal levels. By choosing the largest signal from the training signal generator, all possible aliased signals are dismissed. At step 209 the decision is taken that the correct measurements of code phase and carrier frequency have been made. In step 210, the tuning error made by the SPS receiver 16 at the transmission frequency is corrected for any frequency offset by subtracting NΔf_{o.} At step 211, the SPS receiver subsystem 16 issues the command to cause the training signal generator 25 to stop production of the pilot signal. At step 212, the SPS receiver subsystem 16 initiates a search for SPS satellite signals having regard to the detected tuning error.

The SPS receiver subsystem 16 does not compare the frequency of the carrier signal replica generator 23 with the frequency of the oscillator 18, nor does it perform any measurement of the frequency of the carrier replica signal generator. Instead, the SPS receiver 16 initiates the search for satellite signals in a frequency band which is centred on the frequency of the carrier replica signal generator 23, or any offset therefrom. This allows compensation for the tuning error of the SPS receiver 16 without any measurement of it or any calibration of the oscillator 18. This provides the SPS receiver with the approximate frequency at which positioning signals transmitted from satellites are likely to be found, without the processing of satellite signals. The SPS receiver is informed where subsequently to search for satellite signals by way of tuning commands.

The tuning commands may additionally compensate for estimates of the expected satellite and/or user motion induced Doppler frequency offsets. These are computed using an approximate location for the SPS receiver and for one or more of the satellites involved in the signal search. The approximate satellite location may be computed from knowledge of the ephemeris and/or almanacs of these satellites, and an estimate of the local time at the receiver. In the GPS system configuration, ground-based receiver errors cause Doppler frequency estimation errors at the rate of approximately 0.9 Hz per kilometre of location error.

In a further embodiment of the invention, the pilot signal is not fed to the SPS receiver subsystem through its antenna port as shown in Figure 1, but through a special input port designed to accept the training signal. For example, the special input port may be at the input to an intermediate frequency amplifier (not shown) interposed between the down converter 19 and the carrier mixer 20. This has the benefit of simplifying the training signal generator 25. The signal level required at the special input port may be higher than the level required if the pilot signal were applied through the antenna port. Such signals may be easier to attenuate than RF signals. With this embodiment, the observed tuning errors for the SPS receiver 16 using the pilot signal do not account for the frequency errors of local oscillators (not shown) upstream of the point of insertion of the pilot signal. Those skilled in the art will be able to deduce from the frequency plan of the SPS receiver subsystem what tuning frequency corrections are required following the tuning error measurement.

The provision of the program means in the control system of the SPS receiver subsystem to command the training signal generator to start and stop generation of the training signal or pilot signal has the advantage that an accurate setting for the carrier replica generator can be obtained with a good pilot signal signal-to-noise ratio without degrading the sensitivity of the SPS receiver subsystem when it is searching for SPS positioning signals. A similar effect can be obtained by attenuating the pilot signal, or otherwise reducing its received level, during the searching mode. As a further alternative, rather than being increased and reduced in level, the pilot signal frequency may be altered during the searching mode to prevent interference with the positioning signals.

## Claims

1. Mobile communication apparatus having a position-fixing capability, wherein the apparatus comprises:
a two-way communications subsystem having a first signal source (101) for producing, in response to a stabilising signal received from a remote station (11), a signal having a precision reference frequency;
a training signal generator (25) for generating a pilot signal at an output thereof, the training signal generator having an input coupled to an output of the first signal source (109) so that the pilot signal is linked to the reference frequency; and
a satellite positioning system (SPS) receiver subsystem comprising:
at least one signal path;
a coupling between the signal path and the training signal generator output;
an antenna (17) for applying to the signal path positioning signals received from SPS transmitters;
a carrier signal replica generator (23) for generating a replica signal being a replica of a positioning signal received from an SPS transmitter; and
a control system (22) operable to cause the carrier signal replica generator to bring the replica signal into alignment with the pilot signal when the pilot signal is received by the SPS receiver subsystem and to store information representative of a setting of the replica generator occurring at the time of said alignment;
the control system being further operable to cause the SPS receiver subsystem to search for positioning signals transmitted by a said SPS transmitter according to said setting information.

2. Mobile apparatus according to claim 1, in which the pilot signal is modulated with a modulation signal of a type modulated onto the positioning signals to be received by the SPS receiver subsystem, the modulation signal comprising at least one of data and a spreading code.

3. Mobile apparatus as claimed in claim 1 or claim 2, in which the training signal is a radio frequency signal at a frequency at least approximately equal to the frequency or frequencies of SPS positioning signals to be received by the SPS receiver subsystem.

4. Mobile apparatus as claimed in claim 1 or claim 2, wherein the SPS receiver subsystem includes a frequency down-converter for converting received positioning signals to an intermediate frequency and wherein the pilot signal is generated at a frequency at least approximately equal to said intermediate frequency.

5. Mobile apparatus as claimed in claim 3, in which the pilot signal includes a signal having a frequency offset from a transmission frequency of the SPS positioning signals by a predetermined amount.

6. Mobile apparatus as claimed in claim 4, in which the pilot signal includes a signal having a frequency offset from a typical frequency of the positioning signals after down-conversion to the intermediate frequency by a predetermined amount.

7. Mobile apparatus as claimed in claim 5 or claim 6, in which data representing the amount of the frequency offset is modulated onto the pilot signal.

8. Mobile apparatus according to any preceding claim, in which the control system of the SPS receiver subsystem comprises means to request the training signal generator to generate the pilot signal.

9. A method of searching for positioning signals transmitted by a satellite positioning system (SPS) transmitter, the method comprising:
using a signal source (101) forming part of a two-way communications subsystem and having a precision reference frequency stabilised in response to a stabilising signal received from a remote station (11) as a reference to generate a pilot signal;
generating a carrier replica signal in a carrier signal replica generator (23);
controlling the carrier signal replica generator (23) to cause the replica signal to become aligned with the pilot signal;
using a setting of the carrier signal replica generator (23) at a time when the replica signal was aligned with the training signal to search for positioning signals transmitted by an SPS transmitter; and
subsequently, controlling the carrier signal replica generator (23) to cause the replica signal to become aligned with the positioning signals.

10. A method as claimed in claim 9, further comprising modulating the pilot signal with a modulation signal of a type modulated onto positioning signals transmitted by the SPS transmitter, the modulation signal comprising at least one of data and a spreading code.

11. A method as claimed in claim 9 or claim 10, in which the step of using said signal source as a reference involves taking into account a predetermined frequency offset.

12. A method as claimed in claim 11, further comprising modulating the pilot signal with data indicative of the predetermined amount of offset.

13. A method according to any of claims 9 to 12, in which the pilot signal includes a radio frequency signal having a frequency at least approximately equal to the transmission frequency of said positioning signals.

14. A method according to any of claims 9 to 12, in which said positioning signals are down converted to an intermediate frequency and the carrier signal replica generator is so controlled that the replica signal is caused to become aligned with the down converted positioning signals, and in which the pilot signal includes at least a component having a frequency at least approximately equal to said intermediate frequency.

15. A method according to claim 13, in which the pilot signal includes a signal having a frequency offset from a transmission frequency of the SPS positioning signals by a predetermined amount.

16. A method according to claim 14, in which the pilot signal includes a signal having a frequency offset from a typical frequency of the positioning signals after down conversion to the intermediate frequency by a predetermined amount.

17. A method according to any of claims 9 to 16, wherein the step of using the carrier signal replica generator setting comprises using stored information representative of that setting to generate at least one new setting of the replica generator for searching for said positioning signals, which new setting is offset from the setting represented by the stored information.

18. A method according to claim 17, including computing the amount of the offset of the new setting.

19. A method according to any of claims 9 to 18, in which the pilot signal is deactivated during said searching for positioning signals transmitted by an SPS transmitter.

20. A communications system including mobile communication apparatus according to any of claims 1 to 8 and a remote station in wireless communication with the mobile apparatus, the remote station including a temperature controlled or temperature compensated precision reference frequency source.

21. A communications and position-fixing system comprising a communications base station (11) and a mobile station, each said station having a respective receiver and transmitter to provide a two-way radio communication link between the stations, wherein:
the base station (11) has a precision frequency reference (11A); and
the mobile station comprises a reference signal source (101), means for adjusting the reference signal source (101) to cause it to produce a frequency reference signal calibrated by the precision frequency reference over the said link, a training signal generator (25) arranged to generate an SPS training signal using the calibrated frequency reference signal as a frequency reference, and an SPS receiver arranged to receive SPS positioning signals and having a carrier signal replica generator for generating a replica signal which is a replica of a positioning signal which the SPS receiver is arranged to receive, the SPS receiver further having control circuitry (22) arranged to set the carrier signal replica generator thereby to align the replica signal with the training signal and to store information representative of a setting of the replica generator occurring at the time of said alignment, the SPS receiver being arranged to perform a search for satellite positioning signals using said setting information of the replica generator.

22. A system according to claim 21, wherein the carrier signal replica generator is coupled to an oscillator, the replica signal being synthesised by a frequency synthesiser from an output signal from the oscillator, the synthesiser incorporating the setting produced by aligning the replica signal with the training signal.

23. A system according to claim 22, arranged such that the training signal is injected into a front end circuit of the SPS receiver.

24. A system according to claim 22, arranged such that the training signal is injected into an intermediate frequency stage of the SPS receiver.

25. A system according to any of claims 21 to 24, wherein the training signal is modulated with a modulation signal of a type modulated into the positioning signals to be received by the SPS receiver, the modulation signal comprising at least one of data and a spreading code.

26. A system according to any of claims 21 to 24, wherein the control circuitry of the SPS receiver comprises means to request the training signal generator to generate the training signal.

27. A computer program storage medium for configuring a mobile communication apparatus according to any of claims 1 to 8, the storage medium storing program means which operate to feed the pilot signal to an SPS signal path in the receiver subsystem, to operate the receiver subsystem to pick up the pilot signal and to align a carrier replica signal generated in the receiver subsystem with the training signal, to store an associated setting of a carrier replica generator generating the replica signal, and to initiate a search by the receiver subsystem for satellite positioning signals using the said setting of the carrier replica generator.

28. A storage medium according to claim 27, wherein the program means operate to initiate and terminate a training sequence which includes issuing a command causing the training signal to be activated and a command causing the training signal to be deactivated.

29. A storage medium according to claim 27, wherein the program means operate to alter the frequency of the training signal such that when it is no longer required for aligning the carrier replica signal it does not interfere with reception of the satellite positioning signals.

30. A storage medium according to claim 27, wherein the program means operate to alter the level of the training signal such that when it is no longer required for aligning the carrier replica signal it is reduced in level to an extent such that it does not interfere with reception of the satellite positioning signal.

31. A storage medium according to any of claims 27 to 30, wherein the program means operate to cause a frequency synthesiser setting to be stored in response to alignment of the replica signal with the training signaL

32. A storage medium according to any of claims 27 to 31, wherein the step of using the said setting of the carrier signal replica generator comprises using stored information representative of that setting to generate at least one new setting of the replica generator for searching the said positioning signals, which new setting is offset from said associated setting.

## Patentansprüche

1. Mobilfunkgerät mit Standortbestimmung, wobei das Gerät umfasst:
ein Zweiwege-Kommunikations-Subsystem mit einer ersten Signalquelle (101) zum Erzeugen eines Signals mit einer Präzisionsreferenzfrequenz im Ansprechen auf ein von einer Remote-Station (11) empfangenes Stabilisierungssignal;
einen Lernsignalgenerator (25) zur Erzeugung eines Pilotsignals an einem Ausgang von diesem, wobei der Lernsignalgenerator einen Eingang aufweist, welcher mit einem Ausgang der ersten Signalquelle (101) gekoppelt ist, sodass das Pilotsignal mit der Referenzfrequenz verknüpft ist; und
ein Satellitensystem (SPS: satellite position system)-Empfänger-Subsystem umfassend:
wenigstens einen Signalpfad;
eine Kopplung zwischen dem Signalpfad und dem Ausgang des Lernsignalgenerators;
eine Antenne (17) zum Anlegen von empfangenen Positionssignalen von SPS-Sendern an den Signalpfad;
einen Trägersignalkopiergenerator (23) zur Erzeugung einer Signalkopie, das eine Kopie eines empfangenen Positionssignal von einem SPS-Sender ist; und
ein Steuersystem (22), um den Trägersignalkopiergenerator zu veranlassen, die Signalkopie an das Pilotsignal anzupassen, wenn das Pilotsignal von dem SPS-Empfänger-Subsystem empfangen wurde und um Information zu speichern, welche eine Einstellung des Kopiergenerators zu der Zeit der Anpassung angibt;
wobei das Steuersystem ferner das SPS-Empfänger-Subsystem veranlasst, nach Positionssignalen entsprechend der Einstellinformation zu suchen, die durch einen SPS-Sender gesendet wurden.

2. Mobilfunkgerät nach Anspruch 1, wobei das Pilotsignal mit einem Modulationssignal einer Gattung moduliert ist, welche auf die von dem SPS-Empfänger-Subsystem zu empfangenen Positionssignale moduliert ist, wobei das Modulationssignal wenigstens einen Datencode oder einen Ausbreitungscode umfasst.

3. Mobilfunkgerät nach Anspruch 1 oder 2, bei welchem das Lernsignal ein Hochfrequenzsignal bei einer Frequenz wenigstens ungefähr gleich der Frequenz oder der Frequenzen der SPS-Positionssignale ist, welche durch das SPS-Empfängersubsystem zu empfangen sind.

4. Mobilfunkgerät nach Anspruch 1 oder 2, wobei das SPS-Empfänger-Subsystem einen Frequenzabwärtsmischer zum Umwandeln der empfangenen Positionssignale auf eine Zwischenfrequenz umfasst und wobei das Pilotsignal mit einer Frequenz erzeugt wird, die wenigstens ungefähr gleich der Zwischenfrequenz ist.

5. Mobilfunkgerät nach Anspruch 3, wobei das Pilotsignal ein Signal einschließt mit einem Frequenzversatz zu einer Übertragungsfrequenz der SPS-Positionssignale um einen vorbestimmten Betrag.

6. Mobilfunkgerät nach Anspruch 4, wobei das Pilotsignal ein Signal umfasst mit einem Frequenzversatz zu einer typischen Frequenz der Positionssignale nach der Abwärtsmischung auf die Zwischenfrequenz um einen vorbestimmten Betrag.

7. Mobilfunkgerät nach Anspruch 5 oder 6, wobei Daten, welche den Betrag des Frequenzversatzes angeben, dem Pilotsignal aufmoduliert sind.

8. Mobilfunkgerät nach einem der vorstehenden Ansprüche, wobei das Steuersystem des SPS-Empfänger-Subsystems Mittel umfasst, um den Lernsignalgenerator aufzufordern, das Pilotsignal zu erzeugen.

9. Verfahren zum Auffinden von Positionssignalen, welche durch einen Sender eines Satellitensystems (SPS) gesendet werden, wobei das Verfahren umfasst:
Verwenden einer Signalquelle (101), welche einen Teil eines Zweiwege-Kommunikations-Subsystems bildet und eine Präzisionsreferenzfrequenz besitzt, die im Ansprechen auf ein von einer Remote-Station (11) als Referenz zum Erzeugen eines Pilotsignals empfangenes Stabilisierungssignal stabilisiert wird;
Erzeugen einer Trägersignalkopie in einem Trägersignalkopiergenerator (23);
Steuern des Trägersignalkopiergenerators (23) um zu verursachen, dass die Signalkopie an das Pilotsignal angepasst wird;
Verwenden einer Einstellung des Trägersignalkopiergenerators (23) zu einer Zeit, zu welcher die Signalkopie an das Lernsignal angepasst war, um Positionssignale aufzufinden, welche durch einen SPS-Sender gesendet werden; und
nachfolgendes Steuern des Trägersignalkopiergenerators (23) um zu verursachen, dass die Signalkopie an die Positionssignale angepasst wird.

10. Verfahren nach Anspruch 9, ferner umfassend das Modulieren des Pilotsignals mit einem Modulationssignal einer Gattung, die auf die von dem SPS-Sender gesendeten Positionssignalen aufmoduliert ist, wobei das Modulationssignal wenigstens einen Datencode oder einen Verbreitungscode umfasst.

11. Verfahren nach Anspruch 9 oder 10, wobei der Schritt des Verwendens der Signalquelle als Referenz für das Berücksichtigen eines vorbestimmten Frequenzversatzes einschließt.

12. Verfahren nach Anspruch 11, ferner umfassend das Modulieren des Pilotsignals mit Daten, welche den vorbestimmten Betrag des Versatzes angeben.

13. Verfahren nach einem der Ansprüche 9 bis 12, wobei das Pilotsignal ein Hochfrequenzsignal einschließt mit einer Frequenz, die wenigstens ungefähr gleich der Sendefrequenz der Positionssignale ist.

14. Verfahren nach einem der Ansprüche 9 bis 12, wobei die Positionssignale auf eine Zwischenfrequenz abwärts gemischt werden und der Trägersignalkopiergenerator so gesteuert wird, dass die Signalkopie an das abwärts gemischte Positionssignal angepasst ist, und wobei das Pilotsignal wenigstens eine Komponente umfasst mit einer Frequenz, die wenigstens ungefähr gleich der Zwischenfrequenz ist.

15. Verfahren nach Anspruch 13, wobei das Pilotsignal ein Signal umfasst mit einem Frequenzversatz zur Sendefrequenz der SPS-Positionssignale um einen vorbestimmten Betrag.

16. Verfahren nach Anspruch 14, wobei das Pilotsignal ein Signal umfasst mit einem Frequenzversatz zu einer typischen Frequenz der Positionssignale nach dem Abwärtsmischen auf die Zwischenfrequenz um einen vorbestimmten Betrag.

17. Verfahren nach einem der Ansprüche 9 bis 16, wobei der Schritt des Verwendens der Einstellung des Trägersignalkopiergenerators das Verwenden von gespeicherter Information umfasst, die diese Einstellung angibt, um wenigstens eine neue Einstellung des Kopiergenerators zum Auffinden der Positionssignale zu erzeugen, wobei die neue Einstellung zu der durch die gespeicherte Information festgelegte Einstellung versetzt ist.

18. Verfahren nach Anspruch 17, umfassend das Berechnen des Betrages des Versatzes der neuen Einstellung.

19. Verfahren nach einem der Ansprüche 9 bis 18, wobei das Pilotsignal während des Suchens nach Positionssignalen, die durch einen SPS-Sender gesendet werden, deaktiviert ist.

20. Kommunikationssystem umfassend ein Mobilfunkgerät nach einem der Ansprüche 1 bis 8 und eine Remote-Station in drahtloser Kommunikation mit dem Mobilfunkgerät, wobei die Remote-Station eine temperaturgesteuerte oder temperaturkompensierte Präzisionsreferenzfrequenzquelle umfasst.

21. Kommunikations- und Standortbestimmungssystem umfassend eine Kommunikationsbasisstation (11) und eine Mobilstation, wobei jede Station einen entsprechenden Empfänger und einen Sender aufweist um eine Zweiwege-Kommunikationsverbindung zwischen den Stationen bereitzustellen, wobei
die Basisstation (11) eine Präzisionsreferenzfrequenzeinrichtung (11a) besitzt; und
die Mobilstation eine Referenzsignalquelle (101) umfasst, Mittel zum Einstellen der Referenzsignalquelle (101), damit diese ein Frequenzreferenzsignal erzeugt, das mit der Präzisionsfrequenzreferenz über die Verbindung kalibriert ist, einen Lernsignalgenerator (25) zum Erzeugen eines SPS-Lernsignals unter Verwendung des kalibrierten Frequenzreferenzsignals als Referenzfrequenz und einen SPS-Empfänger um SPS-Positionssignale zu empfangen mit einem Trägersignalkopiergenerator zum Erzeugen einer Signalkopie, welche eine Kopie eines Positionssignals ist, das von dem SPS-Empfänger empfangen wurde, wobei der SPS-Empfänger ferner eine Steuerschaltungsanordnung (22) aufweist, um den Trägersignalkopiergenerator einzustellen und dadurch die Signalkopie an das Lernsignal anzupassen und um Information zu speichern, welche eine Einstellung des Kopiergenerators angibt, die während der Dauer der Anpassung vorliegt,
wobei der SPS-Empfänger anordnet ist, um eine Suche nach Satellitenpositionssignalen auszuführen unter Verwendung der Einstellinformation des Kopiergenerators.

22. System nach Anspruch 21, wobei der Trägersignalkopiergenerator an einen Oszillator gekoppelt ist und die Signalkopie durch einen Frequenzsynthesizer aus einem Ausgangssignal des Oszillators synthetisiert wird, wobei der Synthesizer die durch das Anpassen der Signalkopie an das Lernsignal erzeugte Einstellung berücksichtigt.

23. System nach Anspruch 22, wobei das Lernsignal an eine Front-End-Schaltungsanordnung des SPS-Empfängers angelegt wird.

24. System nach Anspruch 22, wobei das Lernsignal an die Zwischenfrequenzstufe des SPS-Empfängers angelegt wird.

25. System nach einem der Ansprüche 21 bis 24, wobei das Lernsignal mit einem Modulationssignal der Gattung moduliert ist, welche auf die von dem SPS-Empfänger zu empfangenden Positionssignale aufmoduliert ist, wobei das Modulationssignal zumindest einen Datencode oder einen Ausbreitungscode umfasst.

26. System nach einem der Ansprüche 21 bis 24, wobei die Steuerschaltungsanordnung des SPS-Empfängers Mittel umfasst zum Auffordern des Lernsignalgenerators zur Erzeugung des Lernsignals.

27. Computerprogrammspeichermedium zum Konfigurieren eines Mobilfunkgeräts nach einem der Ansprüche 1 bis 8, wobei das Speichermedium Programmmittel speichert, welche bewirken, dass das Pilotsignal in einem SPS-Signalpfad des Empfängersubsystems eingespeist wird, dass das Empfänger-Subsystem das Pilotsignal aufnimmt und dass die von dem Empfänger-Subsystem erzeugte Trägersignalkopie an das Lernsignal angepasst wird, dass eine zugeordnete Einstellung des Trägersignalkopiergenerators gespeichert wird, welcher die Signalkopie erzeugt, und dass eine Suche durch das Empfänger-Subsystem nach Satellitenpositionssignalen unter Verwendung der Einstellung des Trägersignalkopiergenerators veranlasst wird.

28. Speichermedium nach Anspruch 27, wobei das Programmmittel eine Lernsequenz auslöst und beendet, welche das Ausgeben eines Befehls beinhaltet, der das Lernsignal aktiviert und eines Befehls, der das Lernsignal deaktiviert.

29. Speichermedium nach Anspruch 27, wobei das Programmmittel bewirkt, dass die Frequenz des Lernsignals verändert wird, sodass es nicht den Empfang der Satellitenpositionssignale stört, wenn es nicht länger für die Anpassung der Trägersignalkopie benötigt wird.

30. Speichermedium nach Anspruch 27, wobei das Programmmittel den Pegel des Lernsignals verändert, sodass dieser im Pegel bis zu einem Umfang vermindert ist, dass es den Empfang der Satellitenpositionssignale nicht stört, wenn es nicht länger für die Anpassung der Trägersignalkopie benötigt wird.

31. Speichermedium nach einem der Ansprüche 27 bis 30, wobei das Programmmittel bewirkt, dass eine Einstellung eines Frequenzsynthesizers gespeichert wird im Ansprechen auf die Anpassung der Signalkopie an das Lernsignal.

32. Speichermedium nach einem der Ansprüche 27 bis 31, wobei der Schritt des Verwendens der Einstellung des Trägersignalkopiergenerators das Verwenden von gespeicherter Information umfasst, welche diese Einstellung angibt, um wenigstens eine neue Einstellung des Kopiergenerators zum Suchen nach Positionssignalen zu erzeugen, wobei die neue Einstellung zu der zugeordneten Einstellung versetzt ist.

## Revendications

1. Appareil mobile de communications ayant des possibilités de détermination de position, dans lequel l'appareil comprend :
un sous-système de communications bidirectionnelles ayant une première source de signaux (101) destinée à produire, en réponse à un signal de stabilisation reçu d'une station distante (11), un signal ayant une fréquence de référence de précision,
un générateur (25) de signal d'apprentissage destiné à créer un signal pilote à une sortie du générateur, le générateur de signal d'apprentissage ayant une entrée couplée à une sortie de la première source de signaux (101), de sorte que le signal pilote est lié à la fréquence de référence, et
un sous-système récepteur d'un système de positionnement par satellite (SPS) qui comprend :
au moins un trajet de signaux,
un couplage entre le trajet de signaux et la sortie du générateur de signal d'apprentissage,
une antenne (17) destinée à appliquer au trajet de signaux des signaux de positionnement reçus d'émetteurs SPS,
un générateur (23) de réplique de signal de porteuse destiné à créer un signal réplique qui est une réplique d'un signal de positionnement reçu d'un émetteur SPS, et
un système de commande (22) destiné à mettre le signal de réplique dans l'alignement du signal pilote lorsque le signal pilote est reçu par le sous-système récepteur SPS et à mémoriser l'information représentative du réglage du générateur de réplique produite au moment de l'alignement, par le générateur de réplique de signal de porteuse,
le système de commande étant en outre destiné à provoquer la recherche de signaux de positionnement émis par l'émetteur SPS en fonction des informations de réglage par le sous-système récepteur SPS.

2. Appareil mobile selon la revendication 1, dans lequel le signal pilote est modulé par un signal de modulation d'un type modulé sur les signaux de positionnement destinés à être reçus par le sous-système récepteur SPS, le signal de modulation comprenant au moins des données ou un code de propagation.

3. Appareil mobile selon la revendication 1 ou 2, dans lequel le signal d'apprentissage est un signal à haute fréquence, ayant une fréquence au moins approximativement égale à la fréquence ou aux fréquences des signaux de positionnement SPS destinés à être reçus par le sous-système récepteur SPS.

4. Appareil mobile selon la revendication 1 ou 2, dans lequel le sous-système récepteur SPS comprend un convertisseur à une fréquence inférieure destiné à convertir les signaux reçus de positionnement à une fréquence intermédiaire, et dans lequel le signal pilote est créé à une fréquence au moins approximativement égale à la fréquence intermédiaire.

5. Appareil mobile selon la revendication 3, dans lequel le signal pilote comprend un signal ayant une fréquence décalée d'une quantité prédéterminée par rapport à une fréquence d'émission des signaux de positionnement SPS.

6. Appareil mobile selon la revendication 4, dans lequel le signal pilote comprend un signal ayant une fréquence décalée d'une quantité prédéterminée par rapport à une fréquence typique des signaux de positionnement après transformation à la fréquence intermédiaire plus faible.

7. Appareil mobile selon la revendication 5 ou 6, dans lequel des données représentant l'amplitude de décalage de fréquence sont modulées sur le signal pilote.

8. Appareil mobile selon l'une quelconque des revendications précédentes, dans lequel le système de commande du sous-système récepteur SPS comporte un dispositif destiné à demander au générateur de signal d'apprentissage de créer le signal pilote.

9. Procédé de recherche de signaux de positionnement émis par un émetteur d'un système de positionnement par satellite (SPS), le procédé comprenant :
l'utilisation d'une source de signaux (101) faisant partie d'un sous-système de communications bidirectionnelles et ayant une fréquence de référence de précision stabilisée en réponse à un signal de stabilisation reçu d'une station distante (11) comme référence pour la création d'un signal pilote,
la création d'un signal de réplique de porteuse dans un générateur (23) de réplique de signal de porteuse,
la commande du générateur (23) de réplique de signal de porteuse afin qu'il provoque l'alignement du signal de réplique sur le signal pilote,
l'utilisation d'un réglage du générateur (23) de réplique de signal de porteuse à un moment où le signal de réplique est aligné sur le signal d'apprentissage pour la recherche des signaux de positionnement émis par un émetteur SPS, et
ensuite, la commande du générateur (23) de réplique de signal de porteuse afin que le signal de porteuse s'aligne sur les signaux de positionnement.

10. Procédé selon la revendication 9, comprenant en outre la modulation du signal pilote par un signal de modulation d'un type modulé sur des signaux de positionnement émis par l'émetteur SPS, le signal de modulation comprenant au moins des données ou un code propagation.

11. Procédé selon la revendication 9 ou 10, dans lequel l'étape d'utilisation de la source de signaux comme référence comprend la prise en compte d'un décalage prédéterminé en fréquence.

12. Procédé selon la revendication 11, comprenant en outre la modulation du signal pilote par des données représentatives de la quantité prédéterminée du décalage.

13. Procédé selon l'une quelconque des revendications 9 à 12, dans lequel le signal pilote comprend un signal à haute fréquence ayant une fréquence au moins approximativement égale à la fréquence de transmission des signaux de positionnement.

14. Procédé selon l'une quelconque des revendications 9 à 12, dans lequel les signaux de positionnement sont convertis à une fréquence intermédiaire plus faible et le générateur de réplique de signal de porteuse est commandé de manière que le signal de réplique s'aligne sur les signaux de positionnement ayant subi la conversion à une fréquence plus faible, et dans lequel le signal pilote comprend au moins une composante ayant une fréquence au moins approximativement égale à la fréquence intermédiaire.

15. Procédé selon la revendication 13, dans lequel le signal pilote comprend un signal ayant une fréquence décalée d'une quantité prédéterminée par rapport à une fréquence de transmission des signaux de positionnement SPS.

16. Procédé selon la revendication 14, dans lequel le signal pilote comprend un signal ayant une fréquence décalée d'une quantité prédéterminée par rapport à une fréquence typique des signaux de positionnement après conversion à la fréquence intermédiaire plus faible.

17. Procédé selon l'une quelconque des revendications 9 à 16, dans lequel l'étape d'utilisation du réglage du générateur de réplique de signal de porteuse comprend l'utilisation d'informations mémorisées représentatives de ce réglage pour la création d'au moins un nouveau réglage du générateur de réplique pour la recherche des signaux de positionnement, le nouveau réglage étant décalé par rapport au réglage représenté par l'information mémorisée.

18. Procédé selon la revendication 17, comprenant le calcul de la quantité du décalage du nouveau réglage.

19. Procédé selon l'une quelconque des revendications 9 à 18, dans lequel le signal pilote est désactivé pendant la recherche des signaux de positionnement transmis par un émetteur SPS.

20. Système de communications comprenant un appareil mobile de communications selon l'une quelconque des revendications 1 à 8, et une station distante en communications sans fil avec l'appareil mobile, la station distante comprenant une source de fréquences de référence de précision compensée en température ou réglée en température.

21. Système de communications et de détermination de position comprenant une station de base (11) de communications et une station mobile, chaque station ayant un récepteur et un émetteur respectifs destinés à donner une liaison bidirectionnelle de communications radioélectriques entre les stations, dans lequel :
la station de base (11) a une référence de fréquence de précision (11A), et
la station mobile comprend une source (101) d'un signal de référence, un dispositif d'ajustement de la source (101) de signal de référence afin qu'elle produise un signal de référence de fréquence étalonné par la référence de fréquence de précision par l'intermédiaire de la liaison, un générateur (25) de signal d'apprentissage destiné à créer un signal d'apprentissage SPS à l'aide du signal étalonné de référence de fréquence comme référence de fréquence, et un récepteur SPS destiné à recevoir les signaux de positionnement SPS et ayant un générateur de réplique de signal de porteuse destiné à créer un signal de réplique qui est une réplique d'un signal de positionnement que le récepteur SPS est destiné à recevoir, le récepteur SPS ayant en outre un circuit de commande (22) destiné à régler le générateur de réplique de signal de porteuse afin d'aligner le signal de réplique sur le signal de référence et de mémoriser des informations représentatives de réglage du générateur de réplique qui se produit au moment de l'alignement, le récepteur SPS étant disposé afin qu'il exécute une recherche de signaux de positionnement par satellite à l'aide des informations de réglage du générateur de réplique.

22. Système selon la revendication 21, dans lequel le générateur de réplique de signal de porteuse est couplé à un oscillateur, le signal de réplique étant synthétisé par un synthétiseur de fréquences à partir d'un signal de sortie de l'oscillateur, le synthétiseur incorporant le réglage produit par l'alignement du signal de réplique sur le signal d'apprentissage.

23. Système selon la revendication 22, réalisé afin que le signal d'apprentissage soit injecté dans un circuit frontal du récepteur SPS.

24. Système selon la revendication 22, réalisé de manière que le signal d'apprentissage soit injecté dans un étage à fréquence intermédiaire du récepteur SPS.

25. Système selon l'une quelconque des revendications 21 à 24, dont le signal d'apprentissage est modulé par un signal de modulation d'un type modulé sur les signaux de positionnement destinés à être reçus par le récepteur SPS, le signal de modulation comprenant au moins des données ou un code de propagation.

26. Système selon l'une quelconque des revendications 21 à 24, dont le circuit de commande du récepteur SPS comporte un dispositif destiné à demander au générateur de signal d'apprentissage de créer le signal d'apprentissage.

27. Support de mémorisation de programme d'ordinateur destiné à configurer un appareil mobile de communications selon l'une quelconque des revendications 1 à 8, le support de mémorisation mémorisant un dispositif à programme qui assure la transmission du signal pilote à un trajet de signaux SPS dans le sous-système récepteur, qui provoque le prélèvement par le sous-système récepteur du signal pilote et l'alignement d'un signal de réplique de porteuse dans le sous-système récepteur sur le signal d'apprentissage, la mémorisation d'un réglage associé d'un générateur de réplique de porteuse créant le signal de réplique, et le déclenchement d'une recherche par le sous-système récepteur de signaux de positionnement par satellite à l'aide dudit réglage du générateur de réplique de porteuse.

28. Support de mémorisation selon la revendication 27, dans lequel le dispositif à programme assure le déclenchement et la terminaison d'une séquence d'apprentissage qui comprend l'émission d'une commande qui provoque l'activation du signal d'apprentissage et d'une commande qui provoque la désactivation du signal d'apprentissage.

29. Support de mémorisation selon la revendication 27, dans lequel le dispositif à programme assure la modification de la fréquence du signal d'apprentissage de manière que, lorsqu'il n'est plus nécessaire pour l'alignement du signal de réplique de porteuse, il ne perturbe pas la réception des signaux de positionnement par satellite.

30. Support de mémorisation selon la revendication 27, dans lequel le dispositif à programme assure la modification du niveau du signal d'apprentissage de manière que, lorsqu'il n'est plus nécessaire pour l'alignement du signal de réplique de porteuse, il soit réduit à un niveau tel qu'il ne perturbe pas la réception du signal de positionnement par satellite.

31. Support de mémorisation selon l'une quelconque des revendications 27 à 30, dans lequel le dispositif à programme provoque la mémorisation d'un réglage de synthétiseur de fréquence en réponse à l'alignement du signal de réplique sur le signal d'apprentissage.

32. Support de mémorisation selon l'une quelconque des revendications 27 à 31, dans lequel l'étape d'utilisation du réglage du générateur de réplique de signal de porteuse comprend l'utilisation d'informations mémorisées représentatives de ce réglage pour la création d'au moins un nouveau réglage du générateur de réplique destiné à la recherche des signaux de positionnement, le nouveau réglage étant décalé par rapport au réglage associé.
